(19) **Europäisches Patentamt / European Patent Office / Office européen des brevets**

(11) **EP 2 425 109 B1**

(12) **FASCICULE DE BREVET EUROPEEN**

(45) Date de publication et mention
de la délivrance du brevet:
**08.06.2016 Bulletin 2016/23**

(51) Int Cl.:
**F02C 7/232** *(2006.01)* **F02C 9/26** *(2006.01)*
**F02C 9/38** *(2006.01)*

(21) Numéro de dépôt: **10723676.2**

(22) Date de dépôt: **15.04.2010**

(86) Numéro de dépôt international:
**PCT/FR2010/050722**

(87) Numéro de publication internationale:
**WO 2010/125273 (04.11.2010 Gazette 2010/44)**

(54) **PROCEDE ET DISPOSITIF POUR ALIMENTER UNE CHAMBRE DE COMBUSTION DE TURBOMACHINE AVEC UN DEBIT DE CARBURANT REGULE**

VORRICHTUNG UND VERFAHREN ZUR VERSORGUNG EINER TURBOMOTORBRENNKAMMER MIT EINEM GESTEUERTEN KRAFTSTOFFSTROM

METHOD AND DEVICE FOR FEEDING A TURBINE ENGINE COMBUSTION CHAMBER WITH A CONTROLLED FUEL FLOW

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **29.04.2009 FR 0952828**

(43) Date de publication de la demande:
**07.03.2012 Bulletin 2012/10**

(73) Titulaire: **Snecma**
**75015 Paris (FR)**

(72) Inventeurs:
• **HODINOT, Laurent, Gilbert, Yves**
**F-77240 Cesson (FR)**

• **ISSERT, Céline, Marie, Anne**
**F-91100 Corbeil Essonnes (FR)**
• **MARLY, Pascal, Laurent**
**F-77000 Melun (FR)**

(74) Mandataire: **Delumeau, François Guy et al**
**Cabinet Beau de Loménie**
**158, rue de l'Université**
**75340 Paris Cedex 07 (FR)**

(56) Documents cités:
EP-A1- 1 416 136    EP-A2- 1 510 795
WO-A1-99/35385    WO-A1-03/023208
FR-A1- 2 882 098    US-A- 4 922 710

**Description**

Arrière-plan de l'invention

L'invention concerne la régulation du débit de carburant fourni à une chambre de combustion de turbomachine. L'invention est applicable à tous types de turbomachines, à savoir notamment turbines aéronautiques et turbines terrestres industrielles.

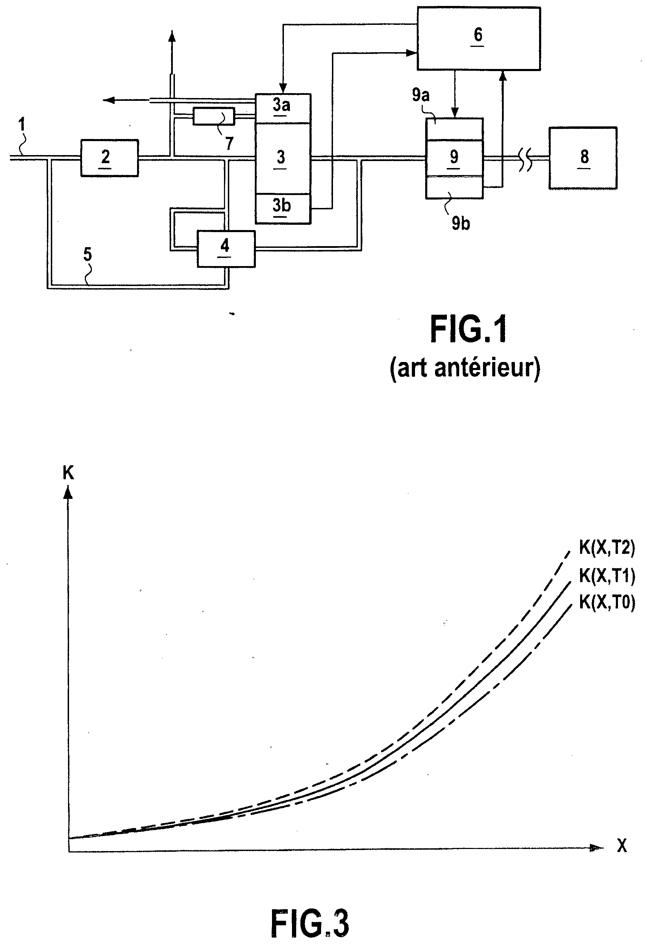

Un dispositif de régulation de débit classique bien connu est représenté sur la figure 1 de façon très schématique dans le cas par exemple d'une turbomachine d'avion.

Un circuit carburant basse pression 1 fournit à une pompe haute pression 2 du carburant prélevé dans un réservoir par une pompe basse pression. La sortie de la pompe haute pression 2 est reliée à un doseur 3 ayant un tiroir dont la position est commandée par une servo-valve électro-hydraulique 3a pour ajuster la section de passage à travers le doseur. Une vanne de dérivation 4 par exemple tarée par un ressort a des ports reliés respectivement à l'entrée et à la sortie du doseur 3 pour maintenir une différence de pression dP constante entre cette entrée et cette sortie de sorte que le débit à travers le doseur est fonction de la section de passage. La vanne de dérivation 4 est montée sur une boucle de recirculation 5 pour dériver vers le circuit de carburant basse pression 1 le carburant fourni en excès par la pompe haute pression, car son régime est lié à celui de la turbomachine.

Une unité de commande électronique 6, généralement intégrée à l'unité de régulation électronique de la turbomachine, commande la servo-valve 3a pour asservir la position du tiroir du doseur, telle que détectée par un capteur 3b, à une position de consigne déterminée en fonction du débit souhaité. Le carburant haute pression en sortie de la pompe est aussi utilisé comme fluide hydraulique d'asservissement pour différents équipements de la turbomachine, notamment la servo-valve 3a qui a un port haute pression recevant le carburant haute pression via un réchauffeur 7 et un port basse pression relié au circuit de carburant basse pression 1. Le réchauffeur 7 est typiquement un échangeur de chaleur carburant/huile. Il permet d'éliminer la présence de givre éventuel dans le carburant utilisé pour l'asservissement et de refroidir l'huile de lubrification utilisée dans la turbomachine.

La sortie du doseur 3 est reliée à la chambre de combustion 8 équipée d'injecteurs via un clapet de coupure 9 par exemple commandé par un électro-robinet 9a. Le clapet 9 est un clapet de coupure en stop et de pressurisation éventuellement utilisé pour la protection de la turbomachine contre les survitesses. L'électro-robinet 9a est commandé par l'unité de commande 6 pour fermer le clapet 9 lorsque requis. Un capteur de proximité 9b fournit à l'unité de commande 6 une information représentative de l'état fermé ou ouvert du clapet. Une deuxième vanne de dérivation pourrait en variante être insérée entre le doseur et le clapet de coupure en stop en étant commandée par un électro-robinet ou une servo-valve de survitesse pour dériver le débit injecté en cas de survitesse détectée.

Un dispositif de régulation de débit de carburant amené à un moteur à turbine à gaz avec doseur, vanne de dérivation maintenant une différence de pression constante entre entrée et sortie du doseur et clapet de coupure et de pressurisation en aval du doseur est décrit dans le document WO 03/023208.

La commande de la section de passage du doseur sous différence de pression constante permet de réguler un débit volumique.

Afin d'améliorer la précision de régulation en fournissant un débit massique contrôlé, une prise en compte de la variation de la densité du carburant en fonction de la température est souhaitable. A cet effet, il est connu d'équiper le tiroir du doseur d'une tige en un matériau choisi pour avoir un coefficient de dilatation thermique propre à compenser la variation de masse volumique du carburant, une légère variation de la section de passage étant ainsi obtenue en fonction de la température pour une même position détectée du tiroir. Il est connu aussi du document WO 99/35385 de prendre en compte la variation de densité du carburant en fonction de la température par l'utilisation de disques bi-métalliques sur lesquels s'appuie le ressort de tarage de la vanne de dérivation associée au doseur.

Par ailleurs, le document US 2008/0163931 décrit la mesure du débit massique de carburant au moyen d'un dispositif qui permet une mesure en fonction de la chute de pression à travers le dispositif, de la section de passage de carburant à travers le dispositif et de la masse volumique de carburant. Le dispositif de mesure est monté en sortie d'un groupe de pompage et la régulation du débit massique est réalisée par pilotage d'une vanne à ouverture variable au moyen d'une boucle d'asservissement recevant des informations représentatives du débit massique désiré et du débit massique mesuré. Un clapet de coupure en stop est en outre prévu.

Objet et résumé de l'invention

L'invention a pour but d'améliorer encore la précision de la régulation du débit de carburant tout en permettant de simplifier l'architecture de l'ensemble de régulation et de coupure.

Selon un premier aspect de l'invention, ce but est atteint grâce à un procédé comprenant :

- la fourniture de carburant haute pression au moyen d'une pompe haute pression recevant du carburant d'un circuit de carburant basse pression,
- la fourniture, par une unité de régulation de débit reliée à la sortie de la pompe haute pression, d'un débit contrôlé de carburant haute pression, via une soupape à position commandée et un clapet de coupure en stop et de pressurisation à ouverture variable,

procédé dans lequel :
- une valeur représentative du débit massique réel de carburant fourni à la chambre de combustion est calculée par une unité de calcul à partir d'informations représentatives de la différence de pression entre entrée et sortie du clapet et de la section de passage à travers le clapet, et
- la soupape a une position variable commandée par l'unité de calcul en fonction de l'écart entre la valeur calculée représentative du débit massique réel et une valeur représentative d'un débit massique désiré.

Une précision de régulation accrue est apportée par la mesure du débit massique réel du carburant permettant d'asservir ce débit à une valeur désirée.

En outre, pour la mesure du débit massique réel, on utilise le clapet de coupure en stop et de pressurisation. Ainsi, les fonctions de régulation de débit de carburant et de coupure en stop et pressurisation sont assurées par une soupape à position commandée associée à un clapet à ouverture variable, donc avec une architecture simplifiée par rapport à celle d'un dispositif de l'art antérieur tel que celui de la figure 1, puisque l'on fait l'économie du doseur classique. Le même clapet peut aussi être utilisé pour la fonction de protection survitesse en étant commandé en fermeture en cas de détection de survitesse de la turbomachine.

Selon une particularité du procédé, la valeur représentative du débit massique réel $W_f$ est calculée selon la formule $W_f = K \sqrt{\varrho.\Delta P}$ dans laquelle K est un coefficient dont la valeur est fonction notamment de la section de passage à travers le clapet, $\varrho$ est la masse volumique du carburant traversant le clapet et $\Delta P$ est la différence de pression entre entrée et sortie du clapet.

L'information représentative de la section de passage à travers le clapet peut être fournie par détection de la position X d'un tiroir du clapet.

Selon un mode de réalisation du procédé, une information représentative de la température T du carburant traversant le clapet est fournie à l'unité de calcul et la valeur de K est déterminée en fonction de la position X et de la température T.

On peut utiliser un densimètre pour fournir à l'unité de calcul une information représentative de la masse volumique $\varrho$ du carburant traversant le clapet, le densimètre fournissant aussi de préférence une information représentative de la température T du carburant le traversant.

On notera que pour un calcul précis du débit massique réel, l'information représentative de la température T et/ou l'information représentative de la masse volumique $\varrho$ du carburant traversant le clapet sont prélevées à proximité du clapet, de préférence au plus près de celui-ci, en aval ou en amont dans le sens de circulation du carburant.

Selon un autre mode de réalisation, la position X du tiroir du clapet est fournie par un capteur de position associé à une tige solidaire du tiroir, et la tige est en un matériau choisi pour avoir un coefficient de dilatation thermique tel que l'influence de la température sur la masse volumique du carburant traversant le clapet est sensiblement compensée par l'influence de la température sur la position du tiroir déterminant la section de passage dans le clapet.

Avantageusement, une position de consigne de la soupape est déterminée par l'unité de calcul en fonction de l'écart entre les valeurs représentatives du débit massique réel du carburant et du débit massique désiré, et une information représentative de la position réelle de la soupape est fournie à l'unité de calcul pour asservir cette position réelle à la position de consigne déterminée.

Selon une autre particularité, une coupure de l'alimentation en carburant peut être commandée par amenée de la soupape dans une position pour laquelle sensiblement tout le carburant reçu de la pompe haute pression est dérivé vers le circuit de carburant basse pression. Les fonctions de coupure en stop en cas d'arrêt normal ou d'extinction de chambre de combustion peuvent donc être intégrées aisément en complément des fonctions de régulation de débit massique, de pressurisation et de coupure en cas de survitesse.

Selon un autre aspect, l'invention vise aussi un dispositif de régulation de débit propre à mettre en oeuvre le procédé défini ci-avant.

Ce but est atteint avec un dispositif comprenant :

- une pompe haute pression apte à recevoir en entrée du carburant d'un circuit de carburant basse pression et à délivrer en sortie du carburant haute pression,
- une unité de régulation de débit reliée à la sortie de la pompe haute pression et comportant une soupape à position variable commandée, et
- un clapet de coupure en stop et de pressurisation à ouverture variable agencé pour être traversé par le débit de carburant haute pression destiné à être fourni à la chambre de combustion,
dispositif dans lequel :
- le clapet est associé à des capteurs aptes à fournir une information représentative de la différence de pression entre entrée et sortie du clapet et une information représentative de la position d'un tiroir mobile du clapet déterminant la section de passage à travers le clapet, et
- une unité de calcul reliée auxdits capteurs est apte à calculer une valeur représentative du débit massique réel de carburant traversant le clapet à partir notamment des informations représentatives de la différence de pression entre entrée et sortie du clapet et de la position du tiroir mobile du clapet, et à commander la position de la soupape en fonction d'un écart entre le débit massique réel et un débit massique de consigne, afin de tendre à annuler cet écart.

Le clapet peut aussi constituer le clapet de coupure en cas de survitesse.

Selon un mode de réalisation du dispositif, il comprend un capteur apte à fournir à l'unité de calcul une information représentative de la température du carburant traversant le clapet.

Le dispositif peut comprendre un densimètre apte à fournir à l'unité de calcul une information représentative de la masse volumique du carburant traversant le clapet ainsi éventuellement qu'une information représentative de la température du carburant traversant le clapet.

Selon un autre mode de réalisation du dispositif, le tiroir du clapet est muni d'une tige coopérant avec le capteur de position et réalisée en un matériau présentant un coefficient de dilatation thermique apte à compenser sensiblement l'influence de la température sur la masse volumique du carburant traversant le clapet.

Selon une particularité du dispositif, un capteur de position est associé à la soupape pour fournir à l'unité de calcul une information représentative de la position réelle de la soupape et l'unité de calcul est apte à asservir la position réelle de la soupape à une position de consigne calculée en fonction de l'écart entre les débits massiques réel et désiré.

Avantageusement, la soupape est munie d'un ressort définissant un seuil de pressurisation minimale du carburant inférieur à la pression d'ouverture du clapet formant clapet de coupure en stop et de pressurisation.

La position de la soupape peut être commandée par une servo-valve électro-hydraulique ou par un moteur électrique. Dans ce dernier cas, il n'est pas nécessaire de disposer de carburant en tant que fluide hydraulique d'asservissement pour commander la position de la servo-valve. Le circuit de fluide hydraulique, qui habituellement comprend un filtre et un réchauffeur, peut donc être omis, dans la mesure où l'actionnement d'autres parties mobiles (ou géométries variables) de la turbomachine ne requiert pas de fluide hydraulique, en étant par exemple réalisé électriquement.

Selon un mode de réalisation avantageux du dispositif, il comprend en outre un support d'enregistrement de données dans lequel sont stockées des informations représentatives de fonctions caractéristiques particulières de composants du dispositif et aptes à être lues par l'unité de calcul.

L'unité de calcul peut être intégrée à l'unité de régulation électrique de la turbomachine. Ainsi, des dispersions de fabrication de composants d'un dispositif à un autre peuvent être prises en compte sans modification des moyens de calcul.

En variante, l'unité de calcul est une unité de calcul locale dédiée dans laquelle sont stockées des informations représentatives de fonctions caractéristiques particulières de composants du dispositif, l'unité de calcul pouvant réaliser localement les calculs pour mesure et régulation du débit massique de carburant.

Brève description des dessins

D'autres particularités et avantages d'un procédé et d'un dispositif selon l'invention ressortiront de la lecture de la description faite ci-après, à titre indicatif mais non limitatif. Il sera fait référence aux dessins joints sur lesquels :

-	la figure 1, déjà décrite, illustre très schématiquement un dispositif connu d'alimentation en carburant et de coupure pour une turbomachine ;
-	la figure 2 montre schématiquement un mode de réalisation d'un dispositif selon l'invention ;
-	la figure 3 montre des courbes représentant des exemples de variation d'un coefficient K utilisé pour le calcul de débit massique en fonction de la position X d'un clapet et de la température T du carburant ; et
-	les figures 4, 5 et 6 sont des vues montrant schématiquement d'autres modes de réalisation de l'invention.

Description détaillée de modes de réalisation de l'invention

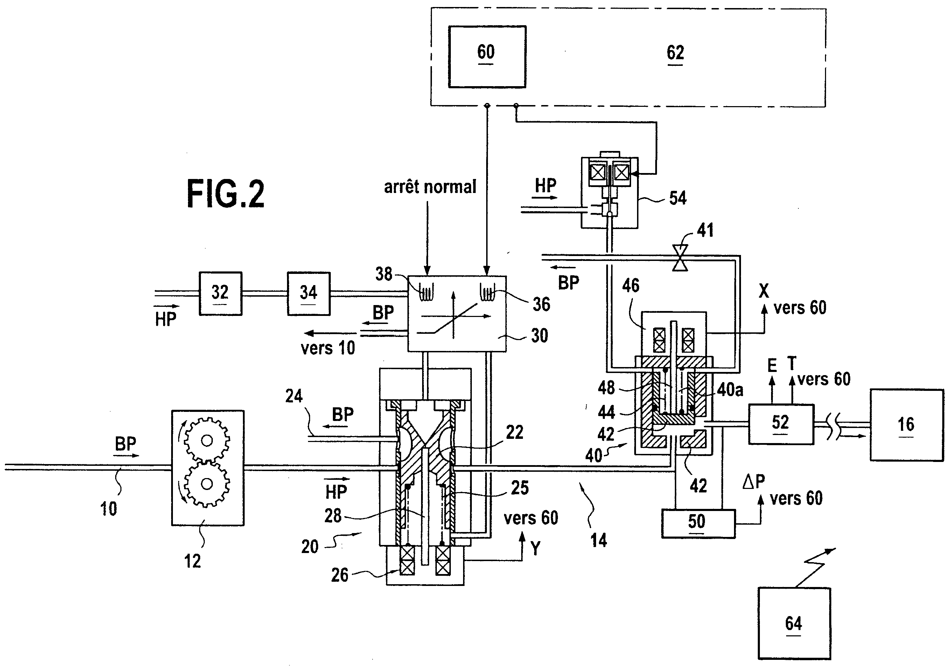

Un mode de réalisation d'un dispositif selon l'invention sera maintenant décrit en référence à la figure 2, dans le cas d'une application à une turbomachine pour avion.

Du carburant basse pression (BP) est fourni par un circuit 10 de carburant basse pression à l'entrée d'une pompe haute pression 12. Le circuit 10 est alimenté en carburant provenant d'un réservoir de l'avion au moyen d'une pompe basse pression (non représentée). Dans l'exemple illustré, la pompe haute pression 12 est une pompe volumétrique à engrenages qui est entraînée par un boîtier de relais d'accessoires couplé mécaniquement à un arbre de turbine de la turbomachine, de façon en soi bien connue. La pompe 12 délivre ainsi sur sa sortie du carburant haute pression (HP) à un débit fonction du régime de la turbomachine.

Sur le circuit 14 de carburant HP entre la sortie de la pompe 12 et la chambre de combustion 16 avec ses injecteurs sont montés une soupape 20 à position variable commandée et un clapet 40 à ouverture variable.

La soupape 20 est ici une soupape de dérivation qui comprend un tiroir ou boisseau 22 dont la position détermine la fraction du débit de carburant reçu de la pompe qui est transmis au clapet 40, la fraction restante en excès étant dérivée vers le circuit 10 de carburant basse pression par une conduite 24.

La position du tiroir 22 est commandée par une servo-valve électro-hydraulique 30 ayant des sorties de commande reliées à des chambres de la soupape 20, de part et d'autre du tiroir et ayant un port haute pression recevant du carburant HP et un port basse pression relié au circuit 10 de carburant BP. Le carburant est utilisé comme fluide hydraulique d'asservissement et le carburant HP est amené à la servo-valve 30 via un filtre 32 et un réchauffeur 34 fonctionnant par échange thermique avec de l'huile de lubrification de la turbomachine. La servo-valve 30 est pilotée électriquement par l'unité de calcul 60 qui fournit un signal d'excitation à un enroulement de commande 36 de la servo-valve. Un ressort 25 est intégré à la soupape 20 pour définir au démarrage un seuil de pressurisation minimale du carburant permettant notamment à la servo-valve 30 de commander la soupape 20.

Avantageusement, un capteur de position 26 fournit à l'unité de calcul 60 une information Y représentative de la position de la soupape 20. Le capteur 26 est par exemple un capteur inductif de type LVDT ("Linear Variable Differential Transformer") qui fonctionne en combinaison avec une tige 28 solidaire du tiroir 22, de façon en soi bien connue.

Le clapet 40 à ouverture variable présente une section de passage pour le carburant qui est fonction de la position X d'un tiroir 42 formant piston. Le tiroir 42 est rappelé par un ressort 44 vers la position de fermeture du clapet 40, le degré d'ouverture étant donc fonction de la pression du carburant en entrée du clapet 40. La section de passage du clapet 40 est de préférence définie pour minimiser la plage de différence de pression entre entrée et sortie.

Un capteur de position 46, par exemple de type LVDT, fonctionne en combinaison avec une tige 48 solidaire du tiroir 42 pour fournir à une unité de calcul 60 une information représentative de la position X du tiroir 42.

Un autre capteur 50 est relié à l'entrée et à la sortie du clapet 40 pour fournir à l'unité de calcul 60 une information représentative de la différence de pression $\Delta P$ entre entrée et sortie du clapet 40.

En outre, un densimètre 52 est monté sur le circuit de carburant HP pour fournir à l'unité de calcul 60 une information représentative de la masse volumique $\varrho$ du carburant traversant le clapet 40. Le densimètre 52 est disposé à proximité du clapet 40, par exemple immédiatement à sa sortie. Avantageusement, le densimètre comprend une sonde de température pour fournir à l'unité de calcul 60 une information représentative de la température T du carburant traversant le clapet 40. On pourrait aussi utiliser un capteur de température distinct du densimètre.

Le densimètre 52 est par exemple muni d'une sonde fournissant un signal représentatif de la permittivité E du carburant à partir de la mesure de capacité électrique entre plusieurs tubes concentriques placés au coeur de l'écoulement du carburant. Le signal représentatif de la permittivité E constitue l'information représentative de la masse volumique $\varrho$. En effet, connaissant la température T et la permittivité E, le type de carburant peut être reconnu par l'unité de calcul 60 à partir d'abaques préenregistrées donnant, pour différents types de carburant, la valeur de la permittivité en fonction de la température. Le type de carburant étant identifié, la masse volumique $\varrho$ peut alors être calculée à partir de courbes préenregistrées donnant, pour différents types de carburant, la masse volumique $\varrho$ en fonction de la température. D'autres types connus de densimètres pourraient être utilisés.

Avantageusement, le clapet 40 constitue le clapet de coupure en stop et de pressurisation. Le clapet 40 comprend une chambre 40a située du côté du tiroir 42 qui est soumis à l'action du ressort 44 et qui est opposé au côté soumis au flux de carburant pénétrant dans le clapet. La chambre 40a a un premier port relié au circuit de carburant BP à travers un diaphragme 41 et un deuxième port relié au circuit de carburant HP via un électro-robinet 54 commandé par l'unité de régulation électronique 62.

Lorsque l'électro-robinet 54 est ouvert, la mise à la haute pression de la chambre 40a provoque, avec l'assistance du ressort 44, la fermeture du clapet 40 à l'encontre de la pression du carburant sur son entrée.

Lorsque l'électro-robinet est fermé (position normale), la mise à la basse pression de la chambre 40a autorise l'ouverture du clapet 40 à l'encontre de la force de rappel exercée par le ressort 44. Le ressort 44 est taré pour définir un seuil minimum de pressurisation du carburant à partir duquel l'alimentation des injecteurs de la chambre de combustion est autorisée. On notera que, dans la soupape 20, le ressort 25 est taré à une valeur de pressurisation suffisante pour permettre au carburant d'être utilisé comme fluide hydraulique d'asservissement, mais inférieure au seuil d'ouverture du clapet 40. Comme cela est bien connu, la pressurisation du carburant est utile pour permettre son utilisation comme fluide hydraulique pour l'actionnement de différentes parties mobiles, ou géométries variables, de la turbomachine.

La régulation du débit massique du carburant fourni à la chambre de combustion est réalisée de la façon suivante.

La valeur $W_f$ du débit massique réel de carburant traversant le clapet 40 est calculée par l'unité de calcul 60 par application de la formule suivante dérivée de la loi de Bernoulli :

$$W_f = K \sqrt{\varrho . \Delta P}\,,$$

dans laquelle K est un coefficient fonction de la section de passage à travers le clapet.

La valeur de K peut être en pratique déterminée en fonction de la position X du tiroir 42 et de la température T qui influencent toutes deux la valeur de la section de passage.

Des courbes ou des tables représentant les variations de K en fonction de X et de T peuvent être préétablies par essais au banc en utilisant un débitmètre massique et en faisant varier par incréments la position X, les valeurs de $\varrho$ et de T étant connues. L'éventuelle influence du nombre de Reynolds sur K peut être prise en compte. On obtient de cette façon des courbes telles que celles de la figure 3 qui illustrent l'allure de variation de K en fonction de la position X pour différentes températures T0, T1, T2 pour un clapet donné ayant ici une section de passage variant de façon sensiblement exponentielle en fonction de la position X. Ces courbes étant enregistrées, la valeur de K peut être déduite à partir de X et de T, permettant ainsi de calculer le débit massique réel $W_f$ à travers le clapet 40 à partir des valeurs mesurées de X, T, $\varrho$ et $\Delta P$.

L'asservissement de la valeur réelle $W_f$ du débit massique à une valeur désirée correspondant aux conditions de fonctionnement de la turbomachine est effectué par action sur la soupape 20.

A cet effet, une position de consigne de la soupape 20 peut être calculée par l'unité de calcul 60 en fonction de l'écart entre débit massique réel calculé et débit massique désiré. La relation entre, d'une part, la position Y du tiroir 22 de la soupape 20 et, d'autre part, la fraction du débit de carburant HP reçu et effectivement transmise au clapet 40 peut être pré-établie, par exemple par essai, et pré-enregistrée. Cette relation peut aussi être constatée et prise en compte en temps réel car fonction des conditions de fonctionnement , telles que le régime de la pompe, la pression dans la chambre de combustion,.... La servo-valve 30 est commandée par l'unité de régulation électronique 62 pour amener la soupape 20 dans la position de consigne. La présence du capteur 26 permet de réaliser une boucle d'asservissement pour amener plus précisément la position réelle mesurée Y à la valeur de consigne.

Il est possible par un réseau correcteur, à partir de la connaissance de la valeur relative de l'écart entre débit massique réel calculé et débit massique désiré, de commander la servo-valve 30 pour modifier la position de la soupape 20 par incréments successifs jusqu'à annuler sensiblement cet écart.

Il est possible de calculer le courant de consigne à appliquer à la servo-valve 30 en fonction de l'écart entre le débit massique réel calculé et le débit massique désiré, la relation entre le courant appliqué à la servo-valve 30 et la fraction de débit effectivement transmise au clapet 40 étant prise en compte en temps réel car fonction de conditions de fonctionnement telles que, par exemple, le régime (vitesse de rotation) de la pompe 12 ou la pression dans la chambre de combustion.

Dans le mode de réalisation ci-dessus, un densimètre est utilisé pour fournir à l'unité de calcul 60 des informations représentatives de la masse volumique $\varrho$ et de la température T du carburant traversant le clapet 40.

En variante, on pourra utiliser un simple capteur de température donnant l'information T dès lors que sont pré-enregistrées et accessibles par l'unité de calcul 60 une information identifiant le type de carburant utilisé et des informations représentant, pour chaque type de carburant, la variation de sa masse volumique en fonction de la température.

Dans un souci de redondance, l'unité de calcul 60 peut être doublée, de même que l'unité de régulation électronique 62. Les enroulements de commande de la servo-valve 30 et de l'électro-robinet 54 ainsi que les capteurs donnant les positions X et Y sont alors également doublés.

Avantageusement, la servo-valve 30 comprend un enroulement de commande 38 qui peut être excité sur commande à partir du poste de pilotage pour provoquer un arrêt normal de la turbomachine (coupure en stop normale) en plaçant la soupape 20 dans une position dans laquelle la totalité ou quasi-totalité du carburant HP reçu de la pompe 12 est dérivée vers le circuit de carburant BP 10. Le clapet 40 se ferme alors en raison de la diminution de la pression sur son entrée reliée à la soupape 20.

La coupure de l'alimentation en carburant peut aussi être commandée par l'unité de régulation électronique 62 en cas d'extinction de chambre (coupure en stop extinction) par action sur la servo-valve 30 pour placer la soupape 20 dans une position dans laquelle la totalité ou la quasi-totalité du carburant HP reçu de la pompe 12 est dérivée vers le circuit de carburant BP, le clapet 40 se fermant alors.

Lorsqu'une survitesse est détectée à partir de la mesure de la vitesse de rotation d'un arbre de turbine de la turbomachine, l'unité de régulation 62 commande l'électro-robinet 54 pour fermeture du clapet 40 et le courant de commande de la servo-valve 30 est annulé.

Ainsi, avec simplement les composants 20, 30, 40, 50, l'unité de calcul 60 et l'unité de régulation électronique 62, on combine les fonctions de régulation de débit massique, de coupure en stop, de coupure en survitesse et de pressurisation pour l'actionnement des géométries variables.

Selon une particularité avantageuse, les fonctions caractéristiques unitaires pré-établies de composants du dispositif de régulation de débit peuvent être enregistrées sur un support d'informations numériques, par exemple un composant RFID 64 associé physiquement au dispositif.

Ces fonctions caractéristiques unitaires comprennent au moins la relation donnant la valeur de K en fonction de X et éventuellement de T, et peuvent comprendre aussi les fonctions de transfert des capteurs, c'est-à-dire les relations entre les signaux fournis par les capteurs et les valeurs des grandeurs détectées telles que X, $\Delta P$, $\varrho$, T et Y, ainsi que, si nécessaire, les relations entre X et la section de passage dans le clapet 40 et entre Y et la fraction du débit reçu par la soupape 20 qui est transmise (ou celle qui est dérivée).

Lorsque le support d'informations numériques est un composant RFID, l'unité de calcul 60 est agencée pour communiquer avec celui-ci, qu'elle soit ou non intégrée à l'unité de régulation électronique 62 de la turbomachine.

Il est possible, en variante, de stocker ces informations numériques dans une mémoire de l'unité de calcul 60. Celle-ci peut alors être une unité de calcul particulière non intégrée à l'unité de régulation électronique de la turbomachine et associée localement au dispositif de régulation de débit correspondant.

Dans ce dernier cas, l'unité de calcul locale peut effectuer le calcul du débit massique réel $W_f$ à partir des données X, $\Delta$P et de celles fournies par le densimètre et transmettre à l'unité de régulation électronique 62 la valeur de $W_f$, ainsi qu'éventuellement la donnée T et celle sur le type de carburant, l'unité de régulation 62 élaborant alors la position de consigne du tiroir de la soupape 20. L'ensemble formé par le densimètre, le clapet à ouverture variable, le capteur de différence de pression $\Delta$P et le capteur de position X peut constituer alors, avec une unité de calcul locale, un débitmètre massique indépendant de l'unité de régulation de la turbomachine. La position de consigne du tiroir de la soupape 20 pourrait aussi être calculée par l'unité de calcul locale 60.

Les informations numériques représentant des fonctions caractéristiques de composants du dispositif de régulation de débit peuvent être pré-établies à la réception d'un équipement comportant les composants concernés. Elles sont par exemple obtenues par des essais réalisés sur les composants avant leur mise en service. On peut ainsi s'affranchir, au niveau des calculs effectués par l'unité de calcul 60 de la dispersion de fabrication de ces composants pour différents dispositifs de régulation, afin d'augmenter la précision.

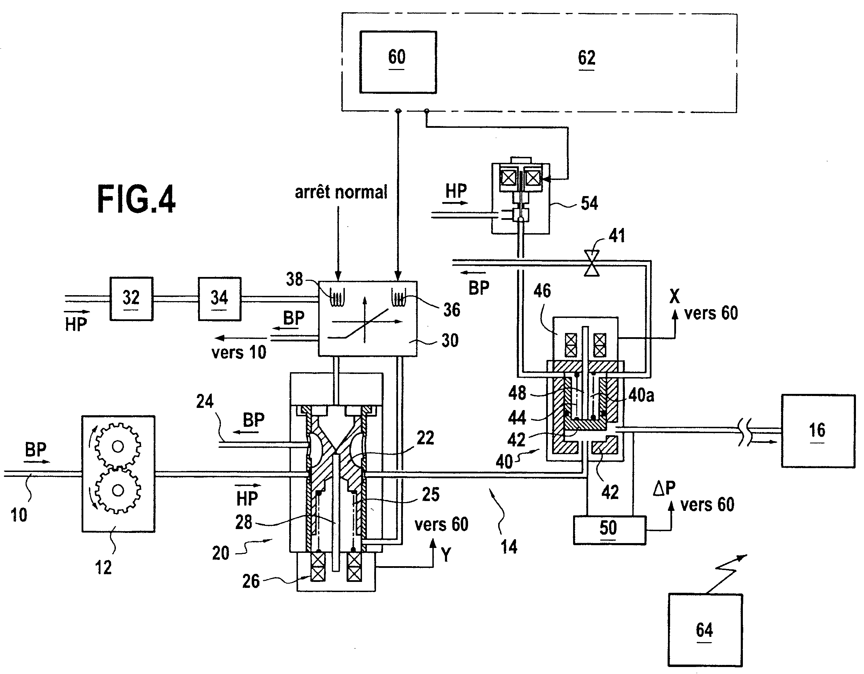

La figure 4 illustre un mode de réalisation qui se distingue de celui de la figure 2 en ce qu'il n'est pas prévu de densimètre.

Il est envisageable qu'une information sur le type de carburant utilisé et des informations représentant la masse volumique par type de carburant à une température donnée, par exemple la température moyenne d'utilisation, sont pré-enregistrées et sont accessibles par l'unité de calcul 60.

La compensation de la variation de la masse volumique du carburant traversant le clapet 40 en fonction de la température peut être effectuée en utilisant une tige 48 en un matériau choisi pour avoir un coefficient de dilatation thermique permettant une telle compensation au moins de façon approximative. La masse volumique du carburant diminuant lorsque la température augmente, on choisit un matériau provoquant une variation de longueur de tige telle que, pour une position X détectée, la section de passage augmente légèrement en fonction de la température. Comme indiqué en tête de la description, un tel mode de compensation est connu en soi. Le matériau de la tige 48 peut être choisi parmi l'aluminium, l'acier inoxydable, l'« Invar » (marque déposée),....

Pour une position X donnée, on choisit, par exemple pour le coefficient K une valeur pré-établie pour la température moyenne d'utilisation avec le carburant le plus courant.

Hormis les différences mentionnées ci-avant, la constitution et le fonctionnement du dispositif de régulation sont similaires à ceux du mode de réalisation de la figure 2.

Le mode de réalisation de la figure 4 est simplifié par rapport à celui de la figure 2 mais le calcul du débit massique réel est légèrement moins précis du fait du caractère approximatif de la compensation de la variation de la masse volumique en fonction de la température et de l'absence de compensation de la variation du coefficient K en fonction de la température.

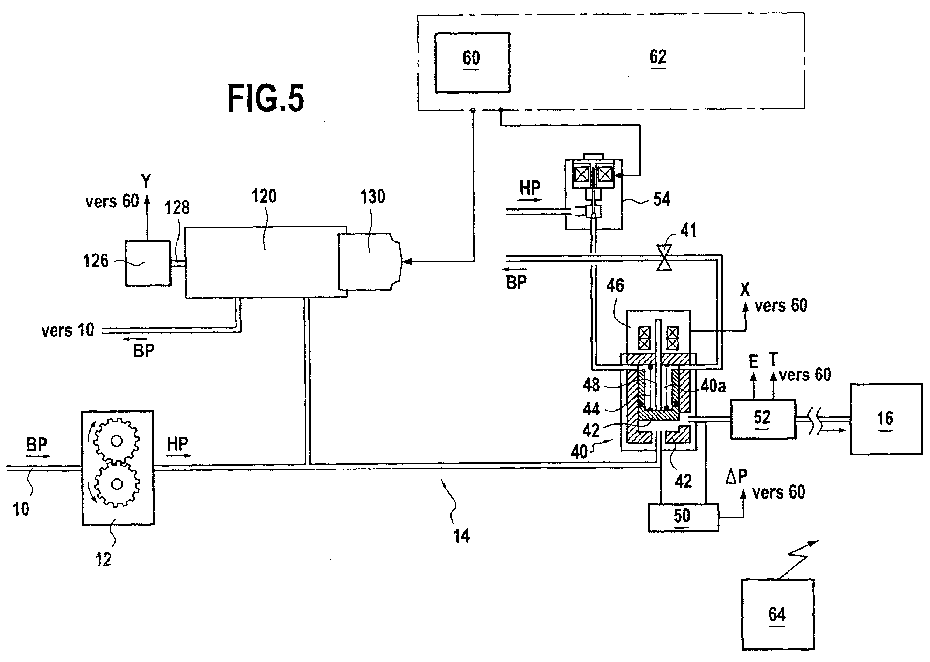

La figure 5 illustre schématiquement un mode de réalisation qui se distingue de celui de la figure 2 en ce que la soupape de dérivation 20 est actionnée par moteur électrique 130 piloté par l'unité de calcul 60.

Le moteur électrique 130 peut être un moteur linéaire ou rotatif. Il agit sur la position du tiroir, ou boisseau, de la soupape pour commander la fraction du débit de carburant HP reçu de la pompe 12 qui est transmise au clapet 40 et celle qui est dérivée vers le circuit de carburant BP 10. La position Y de la soupape est fournie par un capteur 126 coopérant avec un tige 128 solidaire du tiroir (non représenté) de la soupape 120.

L'utilisation d'un moteur électrique à la place d'une servo-valve électro-hydraulique rend inutile l'amenée de fluide hydraulique d'asservissement de la servo-valve. Les sections de passage des ports de la chambre 40a du clapet 40 et de l'électro-robinet 44 sont suffisamment grandes pour être insensibles au givrage, de sorte que filtre et réchauffeur peuvent être omis si les autres géométries variables de la turbomachine ne sont pas actionnées à l'aide de fluide hydraulique, comme c'est le cas si des actionneurs électriques sont utilisés.

Hormis les différences ci-dessus, la constitution et le fonctionnement du dispositif de régulation sont semblables à ceux du mode de réalisation de la figure 2. On pourrait en outre aussi prévoir, dans le mode de réalisation de la figure 5, une mesure de débit massique sans faire appel à un densimètre, comme décrit en référence à la figure 4.

On a envisagé ci-avant des cas où le carburant HP est fourni par une pompe haute pression de type volumétrique.

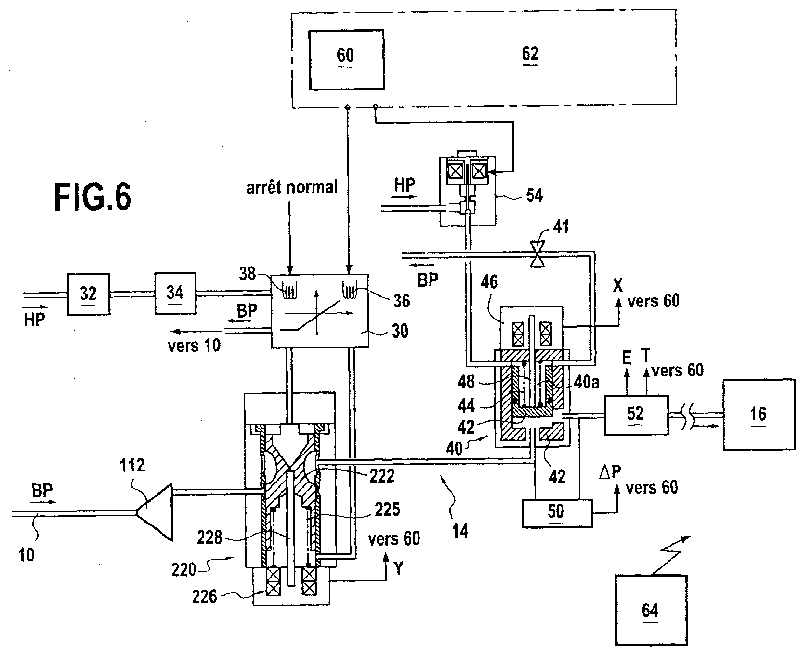

L'invention est utilisable également dans le cas d'une pompe haute pression de type centrifuge, comme montré sur la figure 6.

Sur la figure 6, la pompe centrifuge 112 fournit du carburant haute pression à la soupape 220 placée en série entre la pompe 112 et le clapet 40. La soupape 220 se distingue de la soupape 20 de la figure 2 ou 4 et de la soupape 120 de la figure 5 en ce qu'elle ne comprend pas de retour de carburant en excès vers le circuit de carburant BP 10. Selon la position de son tiroir 222, la soupape 220 étrangle plus ou moins le refoulement de la pompe 112 qui, par sa constitution, fournit une pression sensiblement constante quelle que soit le débit. Le tiroir 222 est soumis à l'action d'un ressort de fermeture 225 et est solidaire d'une tige 228 en coopération avec un capteur de position 226 pour fournir à l'unité de calcul une information représentative de la position Y du tiroir 222. La coupure en stop normale est obtenue par commande de la soupape 220 en fermeture. Pour le reste, le dispositif d'alimentation en carburant peut être semblable à celui de la figure 2 ou de la figure 4 ou de la figure 5, la position de la soupape pouvant être commandée par servo-valve électro-hydraulique ou moteur électrique et la mesure du débit massique réel de carburant pouvant être effectuée avec ou sans l'aide d'un densimètre.

**Revendications**

1. Procédé pour alimenter une chambre de combustion (16) de turbomachine avec un débit de carburant régulé, le procédé comprenant :

   - la fourniture de carburant haute pression au moyen d'une pompe haute pression (12) recevant du carburant d'un circuit de carburant basse pression,
   - la fourniture, par une unité de régulation de débit reliée à la sortie de la pompe haute pression, d'un débit contrôlé de carburant haute pression, via une soupape (20) de dérivation à position commandée et un clapet (40) de coupure en stop et de pressurisation à ouverture variable,
   **caractérisé en ce que** :
   - une valeur représentative du débit massique réel de carburant fourni à la chambre de combustion (16) est calculée par une unité de calcul (60) à partir d'informations représentatives de la différence de pression entre entrée et sortie du clapet (40) et de la section de passage à travers le clapet (40), et
   - la soupape (20) a une position variable commandée par l'unité de calcul en fonction de l'écart entre la valeur calculée représentative du débit massique réel et une valeur représentative d'un débit massique désiré.

2. Procédé selon la revendication 1, **caractérisé en ce que** la valeur représentative du débit massique réel $W_f$ est calculée selon la formule

$$W_f = K \sqrt{\varrho.\Delta P}$$ dans laquelle K est un coefficient dont la valeur est fonction notamment de la section de passage à travers le clapet (40), $\varrho$ est la masse volumique du carburant traversant le clapet (40) et $\Delta P$ est la différence de pression entre entrée et sortie du clapet (40).

3. Procédé selon la revendication 2, **caractérisé en ce que** l'information représentative de la section de passage à travers le clapet (40) est fournie par détection de la position X d'un tiroir du clapet.

4. Procédé selon la revendication 3, **caractérisé en ce qu'**une information représentative de la température T du carburant traversant le clapet (40) est fournie à l'unité de calcul et la valeur de K est déterminée en fonction de la position X et de la température T.

5. Procédé selon la revendication 4, **caractérisé en ce que** la masse volumique $\varrho$ du carburant est évaluée en fonction de la température T et du type de carburant utilisé.

6. Procédé selon l'une quelconque des revendications 2 à 4, **caractérisé en ce que** l'on utilise un densimètre pour fournir à l'unité de calcul une information représentative de la densité du carburant traversant le clapet (40).

7. Procédé selon la revendication 6, **caractérisé en ce que** l'on utilise un densimètre fournissant également une information représentative de la température T du carburant traversant le clapet (40).

8. Procédé selon la revendication 3, **caractérisé en ce que** la position X du tiroir du clapet (40) est fournie par un capteur de position (46) associé à une tige solidaire du tiroir, et la tige est en un matériau choisi pour avoir un coefficient de dilatation thermique tel que l'influence de la température sur la masse volumique du carburant traversant le clapet est sensiblement compensée par l'influence de la température sur la position du tiroir déterminant la section de passage dans le clapet.

9. Procédé selon l'une quelconque des revendications 1 à 8, **caractérisé en ce qu'**une position de consigne de la soupape (20) est déterminée par l'unité de calcul (60) en fonction de l'écart entre les valeurs représentatives du débit massique réel du carburant et du débit massique désiré, et une information représentative de la position réelle de la soupape est fournie à l'unité de calcul pour asservir cette position réelle à la position de consigne déterminée.

10. Procédé selon l'une quelconque des revendications 1 à 9, **caractérisé en ce qu'**une coupure d'alimentation en carburant est commandée par amenée de la soupape (20) dans une position pour laquelle sensiblement tout le carburant reçu de la pompe haute pression (12) est dérivé vers le circuit de carburant basse pression.

**11.** Procédé selon l'une quelconque des revendications 1 à 10, **caractérisé en ce que** l'on munit la soupape (20) d'un ressort (25) définissant, au démarrage, un seuil de pressurisation permettant l'utilisation du carburant comme fluide hydraulique d'asservissement, le seuil de pressurisation étant inférieur à la pression d'ouverture du clapet (40) formant clapet de coupure en stop et de pressurisation.

**12.** Dispositif pour alimenter une chambre de combustion (16) de turbomachine avec un débit de carburant régulé comprenant :

- une pompe haute pression (12) apte à recevoir en entrée du carburant d'un circuit de carburant basse pression et à délivrer en sortie du carburant haute pression,
- une unité de régulation de débit reliée à la sortie de la pompe haute pression et comportant une soupape de dérivation (20) à position variable commandée, et
- un clapet (40) de coupure en stop et de pressurisation à ouverture variable agencé pour être traversé par le débit de carburant haute pression destiné à être fourni à la chambre de combustion, **caractérisé en ce que** :
- le clapet (40) est associé à des capteurs (46, 50) aptes à fournir une information représentative de la différence de pression entre entrée et sortie du clapet et une information représentative de la position d'un tiroir mobile du clapet déterminant la section de passage à travers le clapet, et
- une unité de calcul (60) reliée auxdits capteurs est apte à calculer une valeur représentative du débit massique réel de carburant traversant le clapet à partir notamment des informations représentatives de la différence de pression entre entrée et sortie du clapet et de la position du tiroir mobile du clapet, et à commander la position de soupape en fonction d'un écart entre le débit massique réel et un débit massique de consigne, afin de tendre à annuler cet écart.

**13.** Dispositif selon la revendication 12, **caractérisé en ce qu'**il comprend un capteur apte à fournir à l'unité de calcul une information représentative de la température du carburant traversant le clapet.

**14.** Dispositif selon l'une quelconque des revendications 12 et 13, **caractérisé en ce qu'**il comprend un densimètre (52) apte à fournir à l'unité de calcul une information représentative de la masse volumique du carburant traversant le clapet.

**15.** Dispositif selon la revendication 12, **caractérisé en ce que** le tiroir du clapet est muni d'une tige coopérant avec le capteur de position et réalisée en un matériau présentant un coefficient de dilatation thermique apte à compenser sensiblement l'influence de la température sur la masse volumique du carburant traversant le clapet.

**16.** Dispositif selon l'une quelconque des revendications 12 à 15, **caractérisé en ce qu'**un capteur de position (26) est associé à la soupape (20) pour fournir à l'unité de calcul une information représentative de la position réelle de la soupape et l'unité de calcul est apte à asservir la position réelle de la soupape à une position de consigne calculée en fonction de l'écart entre les débits massiques réel et désiré.

**17.** Dispositif selon l'une quelconque des revendications 12 à 16, **caractérisé en ce que** la soupape (120) est commandée par un moteur électrique (130).

**18.** Dispositif selon la revendication 12, **caractérisé en ce que** la soupape (20) est munie d'un ressort (25) définissant un seuil de pressurisation minimale du carburant inférieur à la pression d'ouverture du clapet (40).

**19.** Dispositif selon l'une quelconque des revendications 12 à 18, **caractérisé en ce qu'**il comprend en outre un support (64) d'enregistrement de données dans lequel sont stockées des informations représentatives de fonctions caractéristiques particulières de composants du dispositif et aptes à être lues par l'unité de calcul (60).

**20.** Dispositif selon l'une quelconque des revendications 12 à 19, **caractérisé en ce que** l'unité de calcul est intégrée à une unité de régulation électronique (62) de la turbomachine.

**21.** Dispositif selon l'une quelconque des revendications 12 à 19, **caractérisé en ce que** l'unité de calcul est une unité de calcul locale dédiée dans laquelle sont stockées des informations représentatives de fonctions caractéristiques particulières de composants du dispositif.

**Patentansprüche**

**1.** Verfahren zur Versorgung einer Brennkammer (16) einer Turbomaschine mit einer geregelten Treibstoffmenge, wobei das Verfahren umfasst:

- die Hochdrucktreibstofflieferung mittels einer Hochdruckpumpe (12), die Treibstoff von einem Niederdrucktreibstoffkreis aufnimmt,
- die Lieferung einer kontrollierten Hochdrucktreibstoffmenge durch eine mit dem Ausgang der Hochdruckpumpe verbundene Mengenregelungseinheit, über ein Bypassventil (20) mit gesteuerter Position und ein Stopp-Abschalt- und Druckbeaufschlagungsventil (40) mit veränderlicher Öffnung,

**dadurch gekennzeichnet, dass**:

- ein Wert, der für den der Brennkammer (16) gelieferten tatsächlichen Treibstoffmassenstrom repräsentativ ist, durch eine Recheneinheit (60) anhand von Informationen, welche für die Druckdifferenz zwischen Eingang und Ausgang des Ventils (40) und für den Durchgangsquerschnitt durch das Ventil (40) repräsentativ sind, berechnet wird, und

- das Ventil (20) eine veränderliche Position hat, die durch die Recheneinheit in Abhängigkeit von der Abweichung zwischen dem für den tatsächlichen Massenstrom repräsentativen berechneten Wert und einem für einen gewünschten Massenstrom repräsentativen Wert gesteuert wird.

2. Verfahren nach Anspruch 1, **dadurch gekennzeichnet, dass** der für den tatsächlichen Massenstrom $W_f$ repräsentative Wert nach der Formel $\varrho$ berechnet wird, worin K ein Koeffizient ist, dessen Wert insbesondere von dem Durchgangsquerschnitt durch das Ventil (40) abhängig ist, p die Massendichte des das Ventil (40) durchströmenden Treibstoffs ist und $\Delta P$ die Druckdifferenz zwischen Eingang und Ausgang des Ventils (40) ist.

3. Verfahren nach Anspruch 2, **dadurch gekennzeichnet, dass** die für den Durchgangsquerschnitt durch das Ventil (40) repräsentative Information durch Erfassen der Position X eines Schiebers des Ventils bereitgestellt wird.

4. Verfahren nach Anspruch 3, **dadurch gekennzeichnet, dass** der Recheneinheit eine Information, welche für die Temperatur T des das Ventil (40) durchströmenden Treibstoffs repräsentativ ist, geliefert wird und der Wert von K in Abhängigkeit von der Position X und von der Temperatur T bestimmt wird.

5. Verfahren nach Anspruch 4, **dadurch gekennzeichnet, dass** die Massendichte ρ des Treibstoffs in Abhängigkeit von der Temperatur T und von dem verwendeten Treibstofftyp bewertet wird.

6. Verfahren nach einem der Ansprüche 2 bis 4, **dadurch gekennzeichnet, dass** ein Dichtemessgerät verwendet wird, um der Recheneinheit eine für die Dichte des das Ventil (40) durchströmenden Treibstoffs repräsentative Information zu liefern.

7. Verfahren nach Anspruch 6, **dadurch gekennzeichnet, dass** ein Dichtemessgerät verwendet wird, das auch eine für die Temperatur T des das Ventil (40) durchströmenden Treibstoffs repräsentative Information liefert.

8. Verfahren nach Anspruch 3, **dadurch gekennzeichnet, dass** die Position X des Schiebers des Ventils (40) durch einen Positionsgeber (46), der einer mit dem Schieber fest verbundenen Stange zugeordnet ist, geliefert wird, und die Stange aus einem Material besteht, das so gewählt ist, dass es einen Wärmeausdehnungskoeffizienten hat, welcher derart ist, dass der Einfluss der Temperatur auf die Massendichte des das Ventil durchströmenden Treibstoffs durch den Einfluss der Temperatur auf die den Durchgangsquerschnitt in dem Ventil bestimmende Position des Schiebers im Wesentlichen kompensiert wird.

9. Verfahren nach einem der Ansprüche 1 bis 8, **dadurch gekennzeichnet, dass** eine Soll-Position des Ventils (20) durch die Recheneinheit (60) in Abhängigkeit von der Abweichung zwischen den für den tatsächlichen Massenstrom des Treibstoffs und für den gewünschten Massenstrom repräsentativen Werten bestimmt wird und der Recheneinheit eine für die Ist-Position des Ventils repräsentative Information geliefert wird, um diese Ist-Position der bestimmten Soll-Position nachzuführen.

10. Verfahren nach einem der Ansprüche 1 bis 9, **dadurch gekennzeichnet, dass** eine Treibstoffzufuhrabschaltung dadurch gesteuert wird, dass das Ventil (20) in eine Position gebracht wird, bei der im Wesentlichen der gesamte Treibstoff, der von der Hochdruckpumpe (12) aufgenommen wird, zu dem Niederdrucktreibstoffkreis abgeleitet wird.

11. Verfahren nach einem der Ansprüche 1 bis 10, **dadurch gekennzeichnet, dass** das Ventil (20) mit einer Feder (25) ausgestattet wird, die beim Start eine Druckbeaufschlagungsschwelle definiert, die die Verwendung des Treibstoffs als hydraulisches Regelfluid ermöglicht, wobei die Druckbeaufschlagungsschwelle niedriger als der Öffnungsdruck des ein Stopp-Abschalt- und Druckbeaufschlagungsventil bildenden Ventils (40) ist.

12. Vorrichtung zur Versorgung einer Brennkammer (16) einer Turbomaschine mit einer geregelten Treibstoffmenge, umfassend:

- eine Hochdruckpumpe (12), die geeignet ist, eingangseitig Treibstoff von einem Niederdrucktreibstoffkreis aufzunehmen und ausgangseitig Hochdrucktreibstoff zu liefern,
- eine Mengenregelungseinheit, die mit dem Ausgang der Hochdruckpumpe verbunden ist und ein Bypassventil (20) mit gesteuerter veränderlicher Position umfasst, und

- ein Stopp-Abschalt- und Druckbeaufschlagungsventil (40) mit veränderlicher Öffnung, das dazu eingerichtet ist, von der Hochdrucktreibstoffmenge, welche dazu bestimmt ist, der Brennkammer geliefert zu werden, durchströmt zu werden,

**dadurch gekennzeichnet, dass**:

- das Ventil (40) Sensoren (46, 50) zugeordnet ist, die geeignet sind, eine Information, welche für die Druckdifferenz zwischen Eingang und Ausgang des Ventils repräsentativ ist, und eine Information, welche für die den Durchgangsquerschnitt durch das Ventil bestimmende Position eines beweglichen Schiebers des Ventils repräsentativ ist, zu liefern, und

- eine mit den Sensoren verbundene Recheneinheit (60) geeignet ist, einen Wert, der für den das Ventil durchströmenden tatsächlichen Treibstoffmassenstrom repräsentativ ist, insbesondere anhand der Informationen, die für die Druckdifferenz zwischen Eingang und Ausgang des Ventils und für die Position des beweglichen Schiebers des Ventils repräsentativ sind, zu berechnen und die Ventilposition in Abhängigkeit von einer Abweichung zwischen dem tatsächlichen Massenstrom und einem Soll-Massenstrom zu steuern, mit dem Ziel, diese Abweichung aufzuheben.

13. Vorrichtung nach Anspruch 12, **dadurch gekennzeichnet, dass** sie einen Sensor umfasst, der geeignet ist, der Recheneinheit eine für die Temperatur des das Ventil durchströmenden Treibstoffs repräsentative Information zu liefern.

14. Vorrichtung nach einem der Ansprüche 12 und 13, **dadurch gekennzeichnet, dass** sie ein Dichtemessgerät (52) umfasst, das geeignet ist, der Recheneinheit eine für die Massendichte des das Ventil durchströmenden Treibstoffs repräsentative Information zu liefern.

15. Vorrichtung nach Anspruch 12, **dadurch gekennzeichnet, dass** der Schieber des Ventils mit einer Stange ausgestattet ist, die mit dem Positionsgeber zusammenwirkt und aus einem Material gefertigt ist, das einen Wärmeausdehnungskoeffizienten aufweist, der geeignet ist, den Einfluss der Temperatur auf die Massendichte des das Ventil durchströmenden Treibstoffs im Wesentlichen zu kompensieren.

16. Vorrichtung nach einem der Ansprüche 12 bis 15, **dadurch gekennzeichnet, dass** ein Positionsgeber (26) dem Ventil (20) zugeordnet ist, um der Recheneinheit eine für die Ist-Position des Ventils repräsentative Information zu liefern, und die Recheneinheit geeignet ist, die Ist-Position des Ventils einer in Abhängigkeit von der Abweichung zwischen dem tatsächlichen und dem gewünschten Massenstrom berechneten Soll-Position nachzuführen.

17. Vorrichtung nach einem der Ansprüche 12 bis 16, **dadurch gekennzeichnet, dass** das Ventil (120) durch einen Elektromotor (130) betätigt wird.

18. Vorrichtung nach Anspruch 12, **dadurch gekennzeichnet, dass** das Ventil (20) mit einer Feder (25) ausgestattet ist, die eine Mindestdruckbeaufschlagungsschwelle des Treibstoffs, welche niedriger als der Öffnungsdruck des Ventils (40) ist, definiert.

19. Vorrichtung nach einem der Ansprüche 12 bis 18, **dadurch gekennzeichnet, dass** sie ferner einen Datenaufzeichnungsträger (64) umfasst, auf dem Informationen, welche für besondere charakteristische Funktionen von Komponenten der Vorrichtung repräsentativ und geeignet sind, durch die Recheneinheit (60) gelesen zu werden, gespeichert sind.

20. Vorrichtung nach einem der Ansprüche 12 bis 19, **dadurch gekennzeichnet, dass** die Recheneinheit in eine elektronische Regelungseinheit (62) der Turbomaschine integriert ist.

21. Vorrichtung nach einem der Ansprüche 12 bis 19, **dadurch gekennzeichnet, dass** die Recheneinheit eine dedizierte lokale Recheneinheit ist, in der Informationen, welche für besondere charakteristische Funktionen von Komponenten der Vorrichtung repräsentativ sind, gespeichert sind.

**Claims**

1. A method of feeding a turbomachine combustion chamber (16) with fuel at a regulated flow rate, the method comprising:

   • supplying high-pressure fuel by means of a high-pressure pump (12) receiving the fuel from a low-pressure fuel circuit;
   • using a flow rate regulation unit connected to the outlet from the high-pressure pump to supply high-pressure fuel at a controlled rate via a position-controlled bypass valve (20) and a variable-restriction stop-and-pressurizing cut-off valve (40);

   the method being **characterized in that**:

   • a value representative of the real mass flow rate of the fuel supplied to the combustion chamber (16) is calculated by a calculation unit (60) on the basis of information representative of the pressure difference between the inlet and the outlet of the cut-off valve (40) and of the flow section through said valve (40); and
   • the position of the position-controlled valve (20) is controlled by the calculation unit as a function of the difference between the calculated value representative of the real mass flow rate and a value that is representative of a desired mass flow rate.

2. A method according to claim 1, **characterized in that** the value representative of the real mass flow rate $W_f$ is calculated in application of the formula:

$$W_f = K \sqrt{\rho . \Delta P}$$

where K is a coefficient of value that is a function in particular of the flow section through the cut-off valve (40), $\rho$ is the density of the fuel passing through said valve (40), and $\Delta P$ is the pressure difference between the inlet and the outlet of said valve (40).

3. A method according to claim 2, **characterized in that** the information representative of the flow section through the cut-off valve (40) is provided by detecting the position X of a slide thereof.

4. A method according to claim 3, **characterized in that** information representative of the temperature T of the fuel passing through the cut-off valve (40) is supplied to the calculation unit, and the value of K is determined as a function of the position X and of the temperature T.

5. A method according to claim 4, **characterized in that** the density $\rho$ of the fuel is evaluated as a function of the temperature T and of the type of fuel used.

6. A method according to any one of claims 2 to 4, **characterized in that** a density meter is used to provide the calculation unit with information representative of the density of the fuel passing through the cut-off valve (40).

7. A method according to claim 6, **characterized in that** a density meter is used that also provides information representative of the temperature T of the fuel passing through the cut-off valve (40).

8. A method according to claim 3, **characterized in that** the position X of the slide of the cut-off valve (40) is provided by a position sensor (46) associated with a rod secured to the slide, and the rod is made of a material that is selected to have a coefficient of thermal expansion such that the influence of temperature on the density of the fuel passing through said valve is substantially compensated by the influence of temperature on the position of the slide determining the flow section through said valve.

9. A method according to any one of claims 1 to 8, **characterized in that** a setpoint position for the position-controlled valve (20) is determined by the calculation unit (60) as a function of the difference between the values representative of the real mass flow rate of the fuel and the desired mass flow rate, and information representative of the real position of said valve is supplied to the calculation unit in order to servo-control said real position to the determined setpoint position.

10. A method according to any one of claims 1 to 9, **characterized in that** fuel feed cut-off is implemented by causing the position-controlled valve (20) to occupy a position in which substantially all of the fuel received from the high-pressure pump (12) is returned to the low-pressure fuel circuit.

11. A method according to any one of claims 1 to 10, **characterized in that** the position-controlled valve (20) is provided with a spring (25) that acts on starting to define a pressurization threshold enabling the fuel to be used as a servo-control hydraulic fluid, the pressurization threshold being lowered than the pressure for opening the cut-off valve (40) constituting the stop-and-pressurizing cut-off valve.

12. A device for feeding a turbomachine combustion chamber (16) with fuel at a regulated flow rate, the device comprising:

a high-pressure pump (12) suitable for receiving at an inlet, fuel from a low-pressure fuel circuit and for delivering high-pressure fuel at an outlet;
· a flow rate regulation unit connected to the outlet from the high-pressure pump and including a position-controlled bypass valve (20); and
· a stop-and-pressurizing cut-off valve (40) of variable restriction that is arranged to pass the high-pressure fuel flow for supplying to the combustion chamber;
the device being **characterized in that**:
· the cut-off valve (40) is associated with sensors (46, 50) suitable for providing information representative of the pressure difference between its inlet and outlet, and information representative of the position of a moving slide thereof that determines the flow section therethrough; and
· a calculation unit (60) connected to said sensors is suitable for calculating a value representative of the real mass flow rate of fuel passing through the cut-off valve in particular on the basis of the information representative of the pressure difference between its inlet and outlet, and of the position of its movable slide, and for controlling the position of the position-controlled valve as a function of the difference between the real mass flow rate and a setpoint mass flow rate in order to tend to eliminate said difference.

**13.** A device according to claim 12, **characterized in that** it includes a sensor suitable for providing the calculation unit with information representative of the temperature of the fuel passing through the cut-off valve.

**14.** A device according to claim 12 or claim 13, **characterized in that** it includes a density meter (52) suitable for providing the calculation unit with information representative of the density of the fuel passing through the cut-off valve.

**15.** A device according to claim 12, **characterized in that** the slide of the cut-off valve is provided with a rod cooperating with the Position sensor and made of a material that presents a coefficient of thermal expansion that is suitable for substantially compensating the influence of temperature on the density of the fuel passing through the cut-off valve.

**16.** A device according to any one of claims 12 to 15, **characterized in that** a position sensor (26) is associated with the position-controlled valve (20) to provide the calculation unit with information representative of the real position of said valve, and the calculation unit is suitable for servo-controlling the real position of said valve to a setpoint position that is calculated as a function of the difference between the real and desired mass flow rate.

**17.** A device according to any one of claims 12 to 16, **characterized in that** the position-controlled valve (120) is controlled by an electric motor (130).

**18.** A device according to claim 12, **characterized in that** the position-controlled valve (20) is provided with a spring (25) defining a minimum pressurization threshold for the fuel that is lower than the opening pressure of the cut-off valve (40).

**19.** A device according to any one of claims 12 to 18, **characterized in that** it further includes a data recording medium (64) having information stored thereon representative of particular characteristic functions of components of the device and suitable for being read by the calculation unit (60).

**20.** A device according to any one of claims 12 to 19, **characterized in that** the calculation unit is incorporated in the electronic regulation unit (62) of the turbomachine.

**21.** A device according to any one of claims 12 to 19, **characterized in that** the calculation unit is a dedicated local calculation unit having information stored therein representative of particular characteristic functions of components of the device.

# FIG.1
## (art antérieur)

K(X,T2)
K(X,T1)
K(X,T0)

# FIG.3

FIG.2

arrêt normal

EP 2 425 109 B1

FIG.4

**FIG.5**

FIG.6

arrêt normal

HP →

BP →

vers 10

BP →

vers 60

X ↑ vers 60

E ↑ T ↑ vers 60

ΔP ↑ vers 60

Y ↑

EP 2 425 109 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03023208 A
- WO 9935385 A
- US 20080163931 A